# EUROPÄISCHE PATENTSCHRIFT

(11) **EP 1 167 007 B1**
(45) Veröffentlichungstag und Bekanntmachung des Hinweises auf die Patenterteilung: **21.05.2003**
(21) Anmeldenummer: 01111415.4
(22) Anmeldetag: 10.05.2001
(51) Int. Cl.: B30B 15/06

(54) **Presspolster sowie Plattenpresse mit solchen Presspolstern**
Press pad and plate press with such a pad
Coussinet pour presse et presse à plaques chauffantes avec un tel coussinet

(30) Priorität: 21.06.2000 DE 20011030 U
(43) Veröffentlichungstag der Anmeldung: 02.01.2002
(73) Patentinhaber: Thomas Josef Heimbach Gesellschaft mit beschränkter Haftung, 52353 Düren (DE)
(72) Erfinder: Halterbeck, Walter, 52353 Düren (DE)
(74) Vertreter: Paul, Dieter-Alfred, Dipl.-Ing.

(56) Entgegenhaltungen:
- WO-A-00/01522
- DE-A- 4 221 612
- US-A- 5 615 470

## Beschreibung

Die Erfindung betrifft ein Preßpolster für Plattenpressen, insbesondere Laminierpressen. Sie bezieht sich ferner auf Plattenpressen für die Herstellung von plattenförmigem Preßgut mit Preßplatten und dazwischen angeordneten Preßpolstern sowie Heizelementen, die mit wenigstens einer Temperatursteuereinrichtung oder mit wenigstens einer Temperaturregeleinrichtung verbunden sind. Ein solches Preßpolster und eine solche Plattenpresse gemäß Oberbegriff von Anspruch 1 sind z.B. aus der DE-A-4 221 612 bekannt.

Die Herstellung von plattenförmigen Schichtmaterialien, beispielsweise dekorativ beschichteten Spanplatten, erfolgt in Laminierpressen, die als Nieder- oder Hochdrucketagenpressen oder Kurztaktpressen ausgebildet sein können. Solche Pressen weisen ein oder mehrere Paare von Heizpreßplatten auf, zwischen denen jeweils zwei Preßpolster angeordnet sind, die die Aufgabe haben, den von den Heizpreßplatten ausgehenden Druck vollflächig und gleichmäßig auf das Preßgut zu übertragen. Die Preßpolster müssen hohen Drücken und auch den in solchen Pressen vorhandenen Temperaturen standhalten können. Beispiele für solche Preßpolster - teilweise auch mit Darstellung von Heizplattenpressen - sind in DE 297 21 495 U1, DE-OS 23 19 593, DE 295 18 204 U1 und DE-OS 26 27 442 beschrieben.

Bei den bekannten Laminierpressen wird die Wärme in den Heizpreßplatten erzeugt und von diesen über Preßpolster sowie gegebenenfalls metallische Druckausgleichsplatten auf das Preßgut übertragen. Dies hat den Nachteil, daß große Massen aufgeheizt werden müssen, wobei viel Wärme durch Abstrahlung an den Heizpreßplatten verlorengeht. Außerdem ist der Wärmetransport von den Heizpreßplatten zum Preßgut relativ lang, so daß die Temperatursteuerung bzw. -regelung sehr träge ist, d.h. Temperaturänderungen an den Heizpreßplatten werden erst mit erheblicher Zeitverzögerung am Preßgut ankommen. Zudem erfolgt die Temperaturmessung an den Heizpreßplatten mit der Folge, daß die am Preßgut herrschende Temperatur nur indirekt erfaßt wird.

Der Erfindung liegt somit die Aufgabe zugrunde, die Beheizung des Preßgutes so zu gestalten, daß wesentliche geringere Wärmeverluste entstehen, also Energie eingespart wird, und daß die Temperatursteuerung bzw. -regelung wesentlich weniger träge und damit erheblich genauer ist.

Diese Aufgabe wird erfindungsgemäß dadurch gelöst, daß das Preßpolster über seine Fläche verteilt Heizelemente aufweist, die an eine Stromquelle anschließbar sind.

Grundgedanke der Erfindung ist es also, die Beheizung des Preßgutes über die Preßpolster vorzunehmen, die dem Preßgut wesentlich näher sind als Heizpreßplatten und die sogar - wenn keine Druckausgleichsplatten Verwendung finden - direkt an dem Preßgut anliegen. Es versteht sich, daß hierdurch wesentlich geringere Wärmeverluste entstehen. Da der Wärmetransportweg sehr kurz ist und auch die aufzuheizenden Massen wesentlich geringer sind, ist die Temperatursteuerng bzw. -regelung erheblich weniger träge und kann deshalb genauer an die jeweiligen Anforderungn angepaßt werden. Außerdem wird die Aufheizzeit verkürzt, wodurch Energie und Zeit eingespart werden. Auch der konstruktive Aufwand ist nicht unerheblich geringer.

Nach der Erfindung ist ferner vorgesehen, daß die Heizelemente zumindest teilweise isoliert sind, damit es nicht zu Kurzschlüssen kommt. Dabei können die Heizelemente jeweils gesondert isoliert ausgebildet sein. Eine zweckmäßige Art der Isolierung besteht darin, daß die Heizelemente in einem Elastomer, insbesondere Silikonelastomer eingebettet werden, wobei das Elastomer in Form einer 1 bis 10 mm dicken Schicht ausgebildet wird, die gleichzeitig auch für eine gleichmäßige Druckverteilung sorgt. Damit ein guter Wärmeübergang erzielt wird, sollte das Elastomer Metallelemente, beispielsweise in Form von Metallpulver, Metallfasern und/oder wenigstens einer Metallfolie, enthalten. Die Heizelemente selbst sollten vorzugsweise aus elektrisch leitfähigen Metallen, wie zum Beispiel Kupfer, Messing, Wolfram oder Aluminium oder typischen Legierungen bestehen.

Nach der Erfindung ist ferner vorgesehen, daß mehrere Gruppen von Heizelementen jeweils getrennten Stromkreisen zugeordnet sind, so daß sie auch getrennt voneinander steuerbar sind. Dabei sollten auch die Gruppen jeweils über die Fläche des Preßpolsters verteilt sein. Beim Aufheizen können dann die Gruppen von Heizelementen zeitlich versetzt mit Strom versorgt werden, wodurch sich der Aufheizprozeß entsprechend beeinflussen läßt.

Die Heizelemente sind vorzugsweise als Heizdrähte ausgebildet, wobei auch schon ein einziger Heizdraht ausreicht, wenn er so über die Fläche des Preßpolsters geführt wird, daß eine im wesentlichen gleichmäßige Wärmeverteilung über die Fläche erzielt wird. Eine gute Wärmeverteilung wird schon dann erreicht, wenn die Heizdrähte parallel zueinander in einer Richtung angeordnet sind. Die Verteilung der Heizdrähte kann jedoch auch so gestaltet werden, daß Gruppen von Heizdrähten in verschiedenen, vorzugsweise zueinander senkrechten Richtungen verlaufen, so daß sich die Gruppen von Heizdrähten kreuzen. Dabei besteht auch hier die Möglichkeit, jede Gruppe einem eigenen Stromkreis zuzuordnen. Die Heizdrähte sind zweckmäßigerweise zumindest teilweise nach außen geführt und dort mit elektrischen Anschlußkontakten versehen.

Die Heizdrähte können beispielsweise ein- oder mehrlagige Gewebe, Gewirke oder Gelege bilden, die gleichzeitig dann auch als Träger für das Preßpolster fungieren. Wenn das Preßpolster ohnehin einen Träger aufweist, der aus einem textilen Fadengebilde, wie Gewebe, Gewirke, Gelege oder dergleichen besteht, ist die Möglichkeit gegeben, einen Teil der Fäden durch Heizdrähte zu ersetzen, so daß die Struktur des Fadengebildes unverändert erhalten bleibt.

Eine besonders vorteilhafte Kombination ergibt sich, wenn das erfindungsgemäße Preßpolster zusätzlich mit wenigstens einem Temperatursensor versehen wird, der über eine Schnittstelle mit einem externen Auswertegerät verbindbar ist. Hierdurch wird die Temperatur sehr nah am Preßgut erfaßt. Beim Einlegen des oder der Preßpolster in die ebenfalls erfindungsgemäße Plattenpresse werden die Heizelemente und der bzw. die Temperatursensor(en) vorzugsweise mit der Temperatursteuereinrichtung oder Temperaturregeleinrichtung verbunden. Es versteht sich, daß durch die preßgutnahe Temperaturerfassung eine dem optimalen Temperaturverlauf besonders nahekommende Temperatursteuerung bzw. Temperaturregelung möglich ist, wodurch eine hohe Qualität des Preßgutes mit große Reproduzierbarkeit erzielt wird. Dabei wirkt sich positiv aus, daß das erfindungsgemäße Preßpolster wegen seiner geringen Wärmekapazität und dem kurzen Wärmeübertragungsweg schnell auf Temperaturänderungen an den Heizelementen reagiert und somit der tatsächliche Temperaturverlauf dem gewünschten Temperaturverlauf sehr eng angepaßt werden kann.

Dabei wird schon ein wesentlicher Fortschritt erzielt, wenn nur eines der Preßpolster mit einem Temperatursensor ausgestattet wird. Von Vorteil kann es jedoch sein, wenn zwischen jedem Paar von Preßplatten wenigstens ein Preßpolster mit wenigstens einem Temperatursensor angeordnet ist, um über eine Mittelwertbildung die Temperatursteuerung oder -regelung zu beeinflussen. Eine noch genauere Temperatursteuerung oder -regelung kann dann erreicht werden, wenn jedem Paar von Preßplatten jeweils ein eigenes Auswertegerät mit Verbindung zu jeweils einer eigenen Temperaturanzeige, einer eigenen Alaramgabeeinrichtung und/oder einer eigenen Temperatursteuereinrichtung und/oder einer eigenen Temperaturregeleinrichtung zugeordnet ist, so daß die Paare von Heizpreßplatten unabhängig gesteuert bzw. geregelt werden können. Dabei besteht auch die Möglichkeit, beide Preßpolster eines Paares von Preßplatten mit Temperatursensoren auszustatten und sie zur Temperatursteuerung oder -regelung heranzuziehen.

was das Preßpolster selbst angeht, reicht schon die Anordnung eines Temperatursensors aus, um die Temperatursteuerung oder -regelung dem optimalen Verlauf wesentlich besser anzupassen. Er sollte dann möglichst in der Flächenmitte des Preßpolsters angeordnet sein. Wenn mehrere Temperatursensoren über die Fläche des Preßpolsters verteilt sind, besteht die Möglichkeit, die Temperaturverteilung besser zu erfassen und für die Temperatursteuerung bzw. -regelung beispielsweise durch Mittelwertbildung heranzuziehen. Dabei sollten die Temperatursensoren möglichst in der gleichen Ebene des Preßpolsters angeordnet sein, damit sie nach der Anordnung der Plattenpresse einen gleichmäßigen Abstand zum Preßgut haben.

Vorzugsweise sollte(n) der bzw. die Temperatursenor(en) nahe oder an einer Flachseite des Preßpolsters angeordnet sein, wobei das Preßpolster in der Plattenpresse so angeordnet werden soll, daß diese Flachseite dem Pressenraum bzw. dem Preßgut zugewandt ist. Diesem Merkmal liegt die Überlegung zugrunde, die Temperatur möglichst preßgutnah zu erfassen.

Als Temperatursensoren eigenen sich alle diejenigen, die in dem Temperaturbereich, in dem Plattenpressen arbeiten, beständig und in der Lage sind, die jeweils herrschende Temperatur zu erfassen. Hierfür kommen in erster Linie Thermoelemente, aber auch Widerstandssensoren sowie Kalt- oder Heißleiter in Frage (Schanz, Sensoren - Fühler der Meßtechnik, Hüthig-Verlag, 1986 Seiten 76 bis 98).

Sofern das Preßpolster einen textilen Träger mit einer Schar von Fäden in zumindest einer Richtung aufweist, beispielsweise in Form eines Gewebes, Gewirkes, Fadengeleges etc., ist es zweckmäßig, wenn zumindest einer der Fäden durch Zuleitungen zu wenigstens einem Temperatursensor ersetzt ist. Hierdurch bleibt die gleichmäßige Struktur des Trägers des Preßpolsters weitestgehend erhalten.

Der Temperatursensor bzw. wenigstens einer der Temperatursensoren kann aus parallelen Einzeldrähten bestehen, die an der Meßstelle blank und dort verdreht sind, so daß sie sich berühren. Die Einzeldrähte können dann nach außen geführt und dort mit einem Stecker versehen werden, der die Schnittstelle bildet.

In der Zeichnung ist die Erfindung anhand von Ausführungsbeispielen näher veranschaulicht. Es zeigen:
- Figur 1: eine teilweise Draufsicht auf ein erstes Preßpolster;
- Figur 2: eine Draufsicht auf ein zweites Preßpolster;
- Figur 3: einen Querschnitt durch die Mitte eines dritten Preßpolsters und
- Figur 4: ein Thermoelement für das Preßpolster gemäß Figur 3.

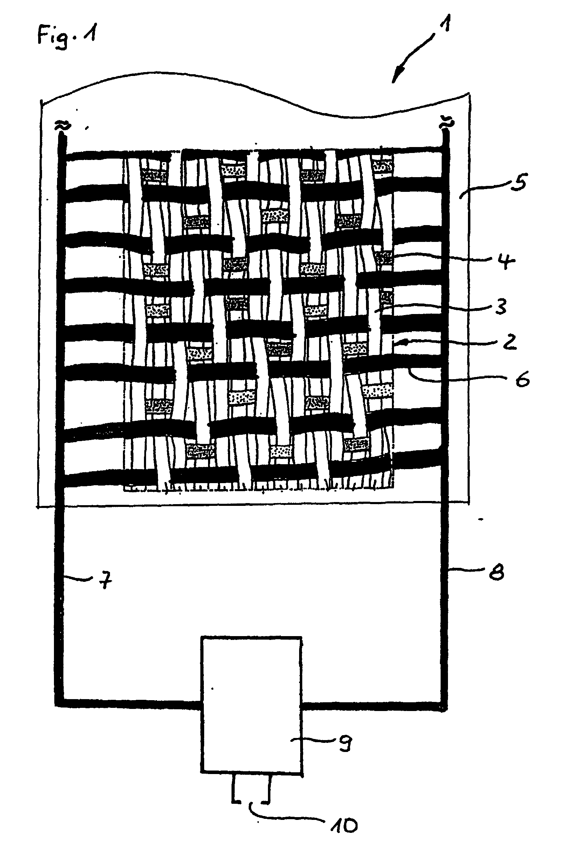

Das in Figur 1 dargestellte Preßpolster 1 weist einen Träger 2 auf, der als Gewebe mit Längsfäden - beispielhaft mit 3 bezeichnet - und Querfäden - beispielhaft mit 4 bezeichnet ausgebildet ist. Der Träger 2 ist nur teilweise dargestellt. Er ist in eine Matrix 5 aus temperaturbeständigem Elastomer, insbesondere aus Silikonelastomer eingelagert. Die Längs- und Querfäden 3, 4 können sowohl aus Kunststoff als auch aus Metall bestehen oder teilweise aus Kunststoff und teilweise aus Metall oder Kombinationen daraus.

Von den Längsfäden 3 ist jeder zweite durch einen Heizdraht - beispielhaft mit 6 bezeichnet - ersetzt, wobei die Heizdrähte 6 bindungsgerecht mit den Längsfäden 3 verwoben sind. Die Enden der Heizdrähte 6 sind auf jeweils einer Seite mit jeweils einer Sammelleitung 7, 8 verbunden, die außerhalb des Preßpolsters 1 in eine Temperaturregeleinrichtung 9 münden, die Teil der zugehörigen Laminierpresse ist, in die das Preßpolster 1 eingesetzt ist. Damit das Preßpolster 1 problemlos ausgetauscht werden kann, sind die Sammelleitungen 7, 8 im Bereich ihres Austrittes aus dem Preßpolster 1 mit Schnittstellen in Form beispielsweise von ineinandergesteckten Stecker und Buchsen versehen. Die Temperaturregeleinrichtung 9 ist mit einer Spannungsquelle 10 verbunden.

Die parallel geschalteten Heizdrähte 6 werden über die Temperaturregeleinrichtung 9 mit elektrischem Strom beaufschlagt. Die von den Heizdrähten 6 abgegebene Wärme entspricht der jeweils eingespeisten elektrischen Leistung, die von der Temperaturregeleinrichtung 9 gesteuert wird. Das von zwei solchen Preßpolstern 1 eingeschlossene, plattenförmige Preßgut wird auf diese Weise über die Preßpolster 1 erwärmt, wobei die Temperaturregeleinrichtung 9 den Temperaturverlauf vorgibt. Damit eine Rückkoppelung vorhanden ist, ist in den Träger 2 ein hier nicht näher dargestellter Temperatursensor eingelagert, der über Kabel und eine entsprechende Schnittstelle an der Außenseite des Preßpolsters 1 mit der Temperaturregeleinrichtung 9 verbunden ist. Auf diese weise wird die jeweilige Temperatur des Preßpolsters 1 erfaßt. Werden Abweichungen von dem in der Temperaturregeleinrichtung 9 gespeicherten Temperaturverlauf festgestellt, wird die auf die Heizdrähte gegebene elektrische Leistung entsprechend angepaßt.

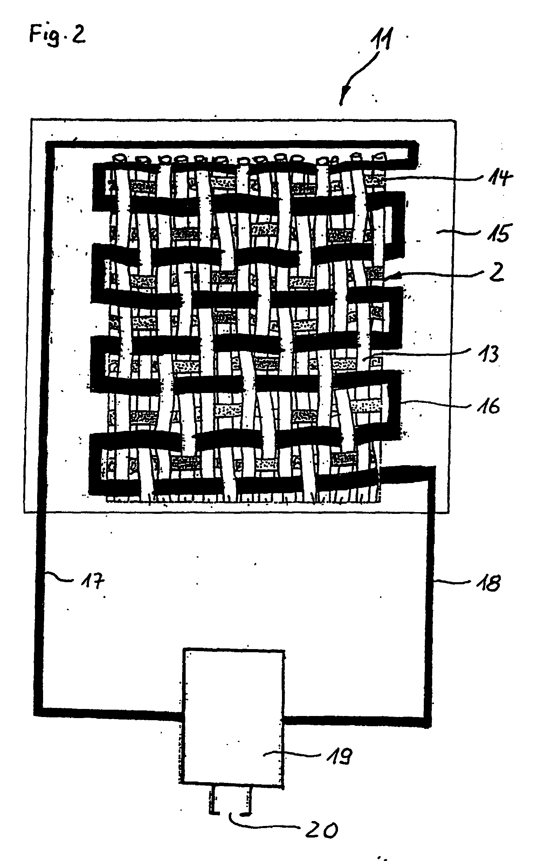

Das in Figur 2 dargestellte Preßpolster 11 hat ebenfalls einen Träger 12 in Form eines Gewebes mit Längsfäden - beispielhaft mit 13 bezeichnet - und Querfäden - beispielhaft mit 14 bezeichnet. Der Träger 12 ist in eine Matrix 15 aus Silikonelastomer eingebettet.

Jeder zweite Querfaden 14 ist durch einen Heizdraht 16 ersetzt, der den Träger 12 nach Art eines Schußfaden mäanderförmig durchsetzt und mit den Längsfäden 13 bindegerecht einbindet. Über Leitungen 17, 18 sind die beiden Enden des Heizdrahtes 16 mit einer Temperaturregeleinrichtung 19 verbunden, die an eine Spannungsquelle 20 angeschlossen ist.

Das Preßpolster 11 unterscheidet sich von dem Preßpolster 1 gemäß Figur 1 lediglich durch die Führung des Heizdrahtes 16. Die Funktion ist die gleiche. Insoweit wird auf die Beschreibung zu dem Preßpolster 1 gemäß Figur 1 Bezug genommen.

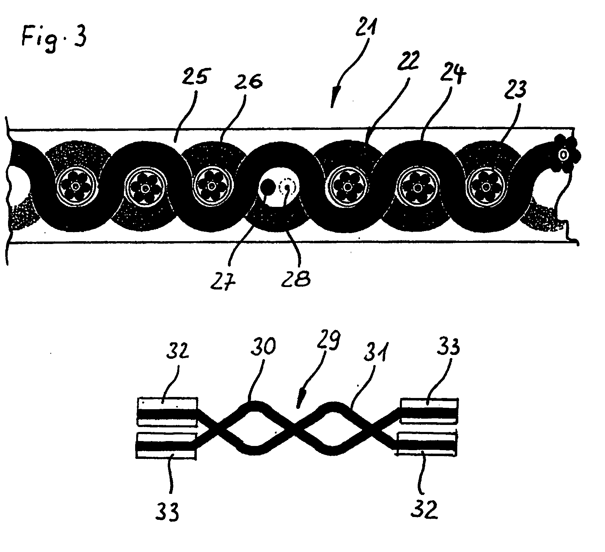

Das in Figur 3 dargestellte Preßpolster 21 weist einen Träger 22 auf, der als einlagiges Gewebe mit Längsfäden - beispielhaft mit 23 bezeichnet - und Querfäden - beispielhaft mit 24 bezeichnet - ausgebildet ist. Der Träger 22 ist in eine Matrix 25 aus Elastomer, insbesondere Silikonelastomer eingebettet. Die Längsfäden 23 und die Querfäden 24 sind in Form eines Leinwandgewebes miteinander verwebt.

Von den Querfäden 24 ist jeder zweite durch einen Heizdraht 26 ersetzt. Der Heizdraht 26 kann so verlaufen, wie bei dem Preßpolster 11 gemäß Figur 2 zu sehen ist, oder aber auch parallel zu weiteren Heizdrähten geschaltet sein, wie dies bei dem Preßpolster 1 gemäß Figur 1 geschehen ist. Das Preßpolster 21 hat auf diese Weise die gleiche Funktion wie die Preßpolster 1, 11 gemäß den Figuren 1 und 2, d.h. es dient der Erhitzung des Preßgutes, wobei der Temperaturverlauf durch eine Temperaturregeleinrichtung beeinflußt wird. Insoweit wird auf die Beschreibung zu dem Preßpolster 1 gemäß Figur 1 Bezug genommen.

In der Mitte ist ein Längsfäden weggelassen und durch zwei elektrisch leitfähige Kabel 27, 28 ersetzt. Die Kabel 27, 28 bilden Zuleitungen zu einem in Figur 4 dargestellten Thermoelement 29. Das Thermoelement 29 wird hier von verdrillten Kerndrähten 30, 31 gebildet, die von den Kabelisolierungen 32, 33 der Kabel 27, 28 befreit sind und aufgrund ihrer Verdrillung aneinander liegen.

Die Kabel 27, 28 werden bei der Herstellung des Trägers 22 anstelle eines Längsfadens 33 so eingelegt, daß das Thermoelement 29 in der Flächenmitte, des Preßpolsters 31 zu liegen kommt. An einer Seite stehen die Kabel 27, 28 nach außen mit einer Überlänge von ca. 1,5 m vor. Die Enden der Kabel 27, 28 werden mit einem TE-Stecker verbunden. Über diesen Thermoelement-Stecker kann die Verbindung zu der Temperaturregeleinrichtung hergestellt werden.

## Patentansprüche

1. Preßpolster (1, 11, 21) für Plattenpressen, **dadurch gekennzeichnet, daß** das Preßpolster (1, 11, 21) über seine Fläche verteilt Heizelemente (6, 16, 26) aufweist.

2. Preßpolster nach Anspruch 1, **dadurch gekennzeichnet, daß** die Heizelemente (6, 16, 26) an eine Stromquelle (10, 20) anschließbar sind.

3. Preßpolster nach Anspruch 2, **dadurch gekennzeichnet, daß** die Heizelemente (6, 16) im Bereich der Preßpolster (1, 11) untereinander kontaktieren.

4. Preßpolster nach einem der Ansprüche 1 bis 3, **dadurch gekennzeichnet, daß** die Heizelemente (6, 16, 26) zumindest teilweise isoliert sind.

5. Preßpolster nach Anspruch 4, **dadurch gekennzeichnet, daß** die Heizelemente (6, 16, 26) in einem Elastomer, insbesondere Silikonelastomer (5, 15, 25), eingebettet sind.

6. Preßpolster nach Anspruch 5, **dadurch gekennzeichnet, daß** das Elastomer (5, 15, 25) Metallelemente enthält.

7. Preßpolster nach Anspruch 6, **dadurch gekennzeichnet, daß** die Metallelemente als Metallpulver, Metallfasern und/oder eine oder mehrere Metallfolie(n) ausgebildet sind.

8. Preßpolster nach einem der Ansprüche 1 bis 7, **dadurch gekennzeichnet, daß** die Heizelemente (6, 16, 26) aus elektrisch leitfähigen Metallen, wie zum Beispiel Kupfer, Messing oder Aluminium bestehen oder anderen typischen Heizdrähten wie Wolfram.

9. Preßpolster nach einem der Ansprüche 1 bis 8, **dadurch gekennzeichnet, daß** mehrere Gruppen von Heizelementen jeweils in getrennten Stromkreisen angeordnet sind.

10. Preßpolster nach einem der Ansprüche 1 bis 9, **dadurch gekennzeichnet, daß** die Heizelemente als wenigstens ein Widerstands-Heizdraht (6, 16, 26) ausgebildet sind.

11. Preßpolster nach einem der Ansprüche 1 bis 10, **dadurch gekennzeichnet, daß** Gruppen von Heizdrähten in verschiedenen Richtungen verlaufen.

12. Preßpolster nach Anspruch 10 oder 11, **dadurch gekennzeichnet, daß** die Heizdrähte (6, 16, 26) zumindest teilweise nach außen führen und dort mit elektrischen Anschlußkontakten versehen sind.

13. Preßpolster nach einem der Ansprüche 10 bis 12, **dadurch gekennzeichnet, daß** die Heizdrähte ein ein- oder mehrlagiges Gewebe, Gewirke oder Gelege bilden.

14. Preßpolster nach einem der Ansprüche 10 bis 12, **dadurch gekennzeichnet, daß** das Preßpolster (1, 11, 21) einen Träger (2, 12, 22) aufweist, der aus einem textilen Fadengebilde, wie Gewebe, Gewirke, Gelege oder dergleichen, besteht, wobei ein Teil der Fäden als Heizdrähte (6, 16, 26) ausgeführt sind.

15. Preßpolster nach einem der Ansprüche 1 bis 14, **dadurch gekennzeichnet, daß** die Heizelemente mehr zur Unterseite oder Oberseite des Preßpolsters angebracht werden und die gegenüberliegende Seite mit einer zusätzlichen Isolationslage versehen wird.

16. Preßpolster nach einem der Ansprüche 1 bis 15, **dadurch gekennzeichnet, daß** das Preßpolster (1, 11, 21) wenigstens einen Temperatursensor (29) aufweist, der über eine Schnittstelle mit einem externen Auswertegerät verbindbar ist.

17. Preßpolster nach Anspruch 16, **dadurch gekennzeichnet, daß** ein Temperatursensor (29) in der Flächenmitte des Preßpolsters (1, 11, 21) angeordnet ist.

18. Preßpolster nach Anspruch 16, **dadurch gekennzeichnet, daß** mehrere Temperatursensoren über die Fläche des Preßpolsters verteilt sind.

19. Preßpolster nach Anspruch 16 oder 17, **dadurch gekennzeichnet, daß** die bzw. mehrere der Temperatursensoren in derselben Ebene des Preßpolsters angeordnet sind.

20. Preßpolster nach einem der Ansprüche 16 bis 19, **dadurch gekennzeichnet, daß** der bzw. die Temperatursensor(en) (29) nahe oder an einer Flachseite des Preßpolsters (1, 11, 21) angeordnet ist bzw. sind.

21. Preßpolster nach einem der Ansprüche 16 bis 20, **dadurch gekennzeichnet, daß** der bzw. die Temperatursensor(en) als Thermoelement (29), Widerstandssensor, Kalt- oder Heißleiter ausgebildet ist bzw. sind.

22. Preßpolster nach einem der Ansprüche 16 bis 21, **dadurch gekennzeichnet, daß** das Preßpolster (1, 11, 21) einen textilen Träger (2, 12, 22) mit einer Schar von Fäden (4, 14, 24) in zumindest einer Richtung aufweist, wobei zumindest einer der Fäden (4, 14, 24) ganz oder teilweise durch Zuleitungen zu wenigstens einem Temperatursensor (29) ersetzt ist.

23. Preßpolster nach einem der Ansprüche 16 bis 22, **dadurch gekennzeichnet, daß** der Temperatursensor (29) bzw. wenigstens einer der Temperatursensoren aus parallelen Einzeldrähten (27, 28) besteht, die an der Meßstelle blank und dort verdrillt oder anderweitig verbunden sind.

24. Preßpolster nach einem der Ansprüche 16 bis 23, **dadurch gekennzeichnet, daß** der bzw. die Temperatursensor(en) über Zuleitungen (27, 28) nach außen geführt und dort einen Stecker aufweist bzw. aufweisen.

25. Plattenpresse für die Herstellung von plattenförmigem Preßgut mit Preßplatten und dazwischen angeordneten Preßpolstern (1, 11, 21) sowie mit Heizelementen (6, 16, 26), die mit wenigstens einer Temperatursteuereinrichtung oder wenigstens einer Temperaturregeleinrichtung (9, 19) verbunden sind, **dadurch gekennzeichnet, daß** Heizelemente (6, 16, 26) in den Preßpolstern über deren Fläche verteilt angeordnet sind.

26. Plattenpresse nach Anspruch 25, **dadurch gekennzeichnet, daß** wenigstens ein Preßpolster (1, 11, 21) wenigstens einen Temperatursensor aufweist, der über eine Schnittstelle mit einem Auswertegerät verbunden ist, welches Signale für eine Temperaturanzeige, eine Alarmgabeeinrichtung und/oder die Temperatursteuereinrichtung oder Temperaturregeleinrichtung (9, 19) erzeugt.

27. Plattenpresse nach Anspruch 26, **dadurch gekennzeichnet, daß** zwischen jedem Paar von Preßplatten wenigstens ein Preßpolster (1, 11, 21) mit wenigstens einem Temperatursensor (29) angeordnet ist.

28. Plattenpresse nach Anspruch 27, **dadurch gekennzeichnet, daß** jedem Paar von Preßplatten jeweils mindestens ein eigenes Auswertegerät mit Verbindung zu jeweils einer eigenen Temperaturanzeige, einer eigenen Alarmgabeeinrichtung und/oder einer eigenen Temperatursteuereinrichtung oder einer eigenen Temperaturregeleinrichtung zugeordnet ist.

## Claims

1. A press pad (1, 11, 21) for platen presses, **characterised in that** the press pad (1, 11, 21) comprises heating elements (6, 16, 26) distributed over its area.

2. A press pad according to claim 1, **characterised in that** the heating elements (6, 16, 26) can be connected to a source of current (10, 20).

3. A press pad according to claim 2, **characterised in that** the heating elements (6, 16) are in contact with each other in the region of the press pad (1, 11).

4. A press pad according to any one of claims 1 to 3, **characterised in that** the heating elements (6, 16, 26) are at least partially insulated.

5. A press pad according to claim 4, **characterised in that** the heating elements (6, 16, 26) are embedded in an elastomer, particularly a silicone elastomer (5, 15, 25).

6. A press pad according to claim 5, **characterised in that** the elastomer (5, 15, 25) contains metal elements.

7. A press pad according to claim 6, **characterised in that** the metal elements are formed as metal powders, as metal fibres and/or as one or more metal foils.

8. A press pad according to any one of claims 1 to 7, **characterised in that** the heating elements (6, 16, 26) consist of electrically conductive metals, such as copper, brass or aluminium, for example, or of other typical heating wires such as tungsten.

9. A press pad according to any one of claims 1 to 8, **characterised in that** there is a plurality of groups of heating elements which are each disposed in separate circuits.

10. A press pad according to any one of claims 1 to 9, **characterised in that** the heating elements are formed as at least one resistance heating wire (6, 16, 26).

11. A press pad according to any one of claims 1 to 10, **characterised in that** groups of heating wires run in different directions.

12. A press pad according to claim 10 or 11, **characterised in that** at least part of the heating wires (6, 16, 26) leads outwards and is provided there with electrical connection contacts.

13. A press pad according to any one of claims 10 to 12, **characterised in that** the heating wires form a single- or multi-layer woven fabric, knitted fabric or lay-up.

14. A press pad according to any one of claims 10 to 12, **characterised in that** the press pad (1, 11, 21) comprises a support (2, 12, 22) which consists of a textile filament product such as a woven fabric, a knitted fabric, a lay-up or the like, wherein part of the filaments is formed as heating wires (6, 16, 26).

15. A press pad according to any one of claims 1 to 14, **characterised in that** more of the heating elements are provided towards the underside or upper side of the press pad, and the opposite side is provided with an additional insulation layer.

16. A press pad according to any one of claims 1 to 15, **characterised in that** the press pad (1, 11, 21) comprises at least one temperature sensor (29) which can be connected via an interface to an external evaluation device.

17. A press pad according to claim 16, **characterised in that** a temperature sensor (29) is disposed in the middle of the area of the press pad (1, 11, 21).

18. A press pad according to claim 16, **characterised in that** there is a plurality of temperature sensors which are distributed over the area of the press pad.

19. A press pad according to claim 16 or 17, **characterised in that** the temperature sensors or a plurality of the temperature sensors are or is disposed in the same plane of the press pad.

20. A press pad according to any one of claims 16 to 19, **characterised in that** the temperature sensor or sensors (29) is or are disposed near or on a face of the press pad (1, 11, 21).

21. A press pad according to any one of claims 16 to 20, **characterised in that** the temperature sensor or sensors is or are formed as a thermoelement (29), a resistance sensor, a PTC resistor or a thermistor.

22. A press pad according to any one of claims 16 to 21, **characterised in that** the press pad (1, 11, 21) comprises a textile support (2, 12, 22) with an assemblage of filaments (4, 14, 24) in at least one direction, wherein at least one of the filaments (4, 14, 24) is completely or partly replaced by supply lines to at least one temperature sensor (29).

23. A press pad according to any one of claims 16 to 22, **characterised in that** the temperature sensor (29) or at least one of the temperature sensors consists of parallel individual wires (27, 28) which are bare at the measuring point and are twisted or otherwise joined there.

24. A press pad according to any one of claims 16 to 23, **characterised in that** the temperature sensor or sensors is or are lead outwards via supply lines (27, 28) and comprises or comprise a connector there.

25. A platen press for the production of board-shaped pressed material, comprising press platens and press pads (1, 11, 21) disposed therebetween, and also comprising heating elements (6, 16, 26) which are connected to at least one temperature controller or to at least one temperature regulating device (9, 19), **characterised in that** heating elements (6, 16, 26) are disposed in the press pads distributed over the area thereof.

26. A platen press according to claim 25, **characterized in that** at least one press pad (1, 11, 21) comprises at least one temperature sensor which is connected via an interface to an evaluation device which generates signals for a temperature display, for an alarm emitting device and/or for the temperature controller or temperature adjusting device (9, 19).

27. A platen press according to claim 26, **characterised in that** at least one press pad (1, 11, 21) comprising at least one temperature sensor (29) is disposed between each pair of press platens.

28. A platen press according to claim 27, **characterised in that** at least one separate evaluation device, which has a connection to a separate temperature display, to a separate alarm emitting device and/or to a separate temperature controller or a separate temperature adjusting device, is associated with each pair of press platens.

## Revendications

1. Coussinet pour presse (1, 11, 21) pour presses à plateaux, **caractérisé en ce que** le coussinet pour presse (1, 11, 21) comporte des éléments chauffants (6, 16, 26) répartis sur sa surface.

2. Coussinet pour presse selon la revendication 1, **caractérisé en ce que** les éléments chauffants (6, 16, 26) sont raccordables à une source de courant (10, 20).

3. Coussinet pour presse selon la revendication 2, **caractérisé en ce que** les éléments chauffants (6, 16) sont en contact les uns avec les autres dans la zone des coussinets pour presse (1, 11).

4. Coussinet pour presse selon l'une des revendications 1 à 3, **caractérisé en ce que** les éléments chauffants (6, 16, 26) sont isolés au moins partiellement.

5. Coussinet pour presse selon la revendication 4, **caractérisé en ce que** les éléments chauffants (6, 16, 26) sont enrobés d'un élastomère, en particulier d'un élastomère silicone (5, 15, 25).

6. Coussinet pour presse selon la revendication 5, **caractérisé en ce que** l'élastomère (5, 15, 25) contient des éléments métalliques.

7. Coussinet pour presse selon la revendication 6, **caractérisé en ce que** les éléments métalliques sont formés comme une poudre métallique, des fibres métalliques et/ou une ou plusieurs feuille(s) métallique(s).

8. Coussinet pour presse selon l'une des revendications 1 à 7, **caractérisé en ce que** les éléments chauffants (6, 16, 26) sont constitués de métaux électroconducteurs, comme par exemple le cuivre, le laiton ou l'aluminium, ou d'autres fils chauffants caractéristiques tels que le tungstène.

9. Coussinet pour presse selon l'une des revendications 1 à 8, **caractérisé en ce que** plusieurs groupes d'éléments chauffants sont respectivement disposés dans des circuits électriques séparés.

10. Coussinet pour presse selon l'une des revendications 1 à 9, **caractérisé en ce que** les éléments chauffants sont formés comme au moins un fil de résistance chauffant (6, 16, 26).

11. Coussinet pour presse selon l'une des revendications 1 à 10, **caractérisé en ce que** des groupes de fils chauffants s'étendent dans diverses directions.

12. Coussinet pour presse selon la revendication 10 ou 11, **caractérisé en ce que** les fils chauffants (6, 16, 26) conduisent, au moins partiellement, vers l'extérieur et, là, sont munis de contacts de raccord électriques.

13. Coussinet pour presse selon l'une des revendications 10 à 12, **caractérisé en ce que** les fils chauffants forment un tissu, un tissu à mailles ou un non-tissé à une couche ou à plusieurs couches.

14. Coussinet pour presse selon l'une des revendications 10 à 12, **caractérisé en ce que** le coussinet pour presse (1, 11, 21) comporte un support (2, 12, 22) qui est constitué d'un produit de fils textiles tel qu'un tissu, un tissu à mailles, un non-tissé ou un produit du même genre, une partie des fils étant réalisée sous forme de fils chauffants (6, 16, 26).

15. Coussinet pour presse selon l'une des revendications 1 à 14, **caractérisé en ce que** les éléments chauffants sont installés plus vers la face inférieure ou la face supérieure du coussinet pour presse et **en ce que** la face opposée est munie d'une couche d'isolation supplémentaire.

16. Coussinet pour presse selon l'une des revendications 1 à 15, **caractérisé en ce que** le coussinet pour presse (1, 11, 21) comporte au moins un détecteur de température (29) qui est connectable à un appareil d'évaluation externe par l'intermédiaire d'une interface.

17. Coussinet pour presse selon la revendication 16, **caractérisé en ce qu'**un détecteur de température (29) est installé au milieu de la surface du coussinet pour presse (1, 11, 21).

18. Coussinet pour presse selon la revendication 16, **caractérisé en ce que** plusieurs détecteurs de température sont répartis sur la surface du coussinet pour presse.

19. Coussinet pour presse selon la revendication 16 ou 17, **caractérisé en ce que** les ou plusieurs des détecteurs de température sont installés dans le même plan du coussinet pour presse.

20. Coussinet pour presse selon l'une des revendications 16 à 19, **caractérisé en ce que** le ou les détecteur(s) de température (29) est ou sont installé(s) près de ou sur une face plate du coussinet pour presse.

21. Coussinet pour presse selon l'une des revendications 16 à 20, **caractérisé en ce que** le ou les détecteur(s) de température est ou sont conçu(s) comme thermocouple (29), détecteur à résistance, résistance PTC ou résistance NTC.

22. Coussinet pour presse selon l'une des revendications 16 à 21, **caractérisé en ce que** le coussinet pour presse (1, 11, 21) comporte un support textile (2, 12, 22) avec un assemblage de fils (4, 14, 24) dans au moins une direction, au moins l'un des fils (4, 14, 24) étant remplacé totalement ou partiellement par des conduites d'amenée à au moins un détecteur de température (29).

23. Coussinet pour presse selon l'une des revendications 16 à 22, **caractérisé en ce que** le détecteur de température (29) ou au moins l'un des détecteurs de température est composé de fils individuels parallèles (27, 28) qui sont nus au point de mesure et, là, torsadés ou assemblés autrement.

24. Coussinet pour presse selon l'une des revendications 16 à 23, **caractérisé en ce que** le ou les détecteur(s) de température est ou sont amenés à l'extérieur par des conduites d'amenée (27, 28) et, là, comporte ou comportent une fiche mâle.

25. Presse à plaques pour la fabrication de matière à presser en forme de plaques avec des plaques pour presse et des coussinets pour presse (1, 11, 21) montés entre elles et avec des éléments chauffants (6, 16, 26) qui sont connectés à au moins un dispositif de commande de température ou à au moins un dispositif de réglage de température (9, 19), **caractérisée en ce que** les éléments chauffants (6, 16, 26) sont répartis, dans les coussinets pour presse, à la surface de ces derniers.

26. Presse à plaques selon la revendication 25, **caractérisée en ce qu'**au moins un coussinet pour presse (1, 11, 21) comporte au moins un détecteur de température qui est connecté à un appareil d'évaluation par l'intermédiaire d'une interface qui génère des signaux pour un affichage de température, un indicateur d'alarme et/ou le dispositif de commande de température ou le dispositif de réglage de température (9, 19).

27. Presse à plaques selon la revendication 26, **caractérisée en ce qu'**au moins un coussinet pour presse (1, 11, 21) avec au moins un détecteur de température est monté entre chaque paire de plaques pour presse.

28. Presse à plaques selon la revendication 27, **caractérisée en ce qu'**au moins un appareil d'évaluation propre connecté à un affichage de température propre, un indicateur d'alarme propre et/ou un dispositif de commande de température propre ou un dispositif de réglage de température propre est respectivement associé à chaque paire de plaques pour presse.
